# EUROPEAN PATENT APPLICATION

(11) **EP 1 137 300 A1**
(43) Date of publication of application: **26.09.2001**
(21) Application number: 00400770.4
(22) Date of filing: 20.03.2000
(51) Int. Cl.: H04Q 7/38, H04L 29/06

(54) **Transmission of location information of a mobile station in a gprs/internet environment**

(71) Applicant: ALCATEL, 75008 Paris (FR)
(72) Inventor: De Vriendt, Johan André, 9051 Afsnee (BE); Leroy, Suresh André Jean-Marie, 2100 Deurne (BE)
(74) Representative: Narmon, Gisèle Marie Thérèse

(57) **Abstract**

A telecommunication network comprising a roaming mobile station (MS) coupled to its Home IP Network (HIPN) via a mobile network MN, a packet-based wireless communication network (GPRS), preferably operating according to the "General Packet Radio Service" [GPRS], and an INTERNET. The status and the location of the mobile station MS is indicated by location information or signaling, as the "Routing Area Updates" [RAU] to the GPRS network and the "Registration Request" messages (RR) to the Home IP network (HIPN), generated by a location signaling circuit (LS) of the mobile station. In order to optimize the transmission of signaling over the radio link (RL) of the mobile network (MN), i.e. to limit as much as possible the load thereon, only the Routing Area Updates are transmitted over the radio link. The Registration Request messages are derived from the Routing Area Updates in the GPRS network and so further transmitted to the Home IP Network (HIPN).

## Description

The present invention relates to a telecommunication network comprising a packet-based wireless communication network and the Internet, said Internet being coupled to a home IP network of a roaming mobile station and to said mobile station by a radio link via said packet-based wireless communication network, said mobile station including location signaling means coupled to a terminal location database of said packet-based wireless communication network for exchanging therewith location information of said mobile station.

Such a telecommunication network comprising a roaming mobile station, its home IP network, the Internet and a packet-based wireless communication network is already known in the art. Therein, the location information is transmitted as signaling by the mobile station to the packet-based wireless communication network via the radio link of a mobile network. This signaling indicates the availability of the roaming mobile station and its movement from one to another routing area. On the one hand, the wireless communication network needs to known the location of the mobile station in order to associate it to an appropriate terminal location database. On the other hand, the home IP network of the roaming station needs regular registration request messages to be informed about the availability of this station. Each signaling of the mobile station is transmitted over the radio link of which the resources are scarce.

An object of the present invention is to provide a telecommunication network of the above known type but wherein the transmission of signaling over the radio link is optimized, i.e. limited as much as possible, while not affecting the mobile IP procedures in the constituting parts of the network.

According to the invention, this object is achieved due to the fact that said packet-based wireless communication network comprises foreign agent means coupled to a device location database associated to said home IP network and coupled to said terminal location database for exchanging therewith second location information of said mobile station, and that said foreign agent means is adapted to derive said second location information from the first mentioned location information.

The first location information is thus the above signaling exchanged between the packet-based wireless communication network and the mobile station for indicating its movement to another routing area, whilst the second location information is the signaling normally sent by the roaming mobile station to its home IP network in order to transmit its availability or status messages. Since each signaling is substantially constituted by the same kind of information, the information is now correlated to limit the use of the radio resources. In this way, only one signaling, the first location information, is transmitted over the radio link, the second location information being derived therefrom by the foreign agent means for updating the device location database.

In a preferred application, the present invention is further characterized in that said packet-based wireless communication network operates according to the "General Packet Radio Service" [GPRS], in that said terminal location database is a "Visited Location Register" [VLR] of said packet-based wireless communication network, and in that said first location information are "Routing Area Updates" [RAU] of said packet-based wireless communication network.

In this way, optimization for the signaling over the radio interface involves the GPRS and mobile IP "Registration Requests" messages, while the procedures only use the periodic routing area updates RAU as signaling transmitted over the radio link.

Another characterizing embodiment of the present invention is that the location signaling means of said mobile station are coupled to said terminal location database via a "service GPRS support node" of said packet-based wireless communication network.

The packet-based wireless communication network generally includes several service GPRS support nodes amongst which one is selected to be coupled to the roaming mobile station.

Moreover, said device location database is a "Home Agent" [HA] of said home IP network and is coupled to said terminal location database via a series connection of said foreign agent means, a "gateway GPRS support node" of said packet-based wireless communication network and said service GPRS support node, said foreign agent means being a "Foreign Agent" [FA] of said home IP network.

In a preferred embodiment of the present invention, said gateway GPRS support node and said service GPRS support node are integrated into a same node of said packet-based wireless communication network.

In this way, the transmission of the second location information between the terminal location database or visited location register [VLR] and the Foreign Agent [FA] associated to the device location database or Home Agent [HA] of the home IP network is optimized because they are integrated in a same device or node.

Also another characterizing embodiment of the present invention is that said "Home Agent" [HA] is coupled to said "Foreign Agent" [FA] of said home IP network by IP tunneling through said Internet.

In a first variant of the telecommunication system of the present invention, the location signaling means of said mobile station are coupled to said terminal location database of said packet-based wireless communication network via a "Global System for Mobile communication" [GSM].

In a second variant of the telecommunication system of the present invention, the location signaling means of said mobile station are coupled to said terminal location database of said packet-based wireless communication network via an "Universal Mobile Telecommunications System" [UMTS].

The present invention also relates to a method for signaling the location of a roaming mobile station coupled to the Internet by a radio link via a packet-based wireless communication network, the method comprising a step of exchanging location information between said mobile station and a terminal location database of said packet-based wireless communication network.

An object of the present method is to optimize the transmission of the location information exchanged as signaling over the radio link between the mobile station and the terminal location database.

According to the invention, this object is achieved owing to the fact that said method further comprises a step of exchanging second location information of said mobile station between said terminal location database and a device location database associated to a home IP network of said mobile station via foreign agent means interfacing said packet-based wireless communication network and said Internet, and that said method further comprises a step of deriving said second location information from the first mentioned location information.

In this way, deriving the second location information from the first location information, only the latter needs to be transmitted over the radio link instead of transmitting the two kind of information that are similar.

Another characterizing embodiment of the present method is that said second location information is derived from the first mentioned location information by said foreign agent means that is a "Foreign Agent" [FA] of said home IP network.

In this way, the Foreign Agent [FA] coupled to the terminal location database emulates the operation of the mobile station and terminates the registration replies of the home IP network.

Further characterizing embodiments of the present invention are mentioned in the appended claims.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 represents a telecommunication system with optimized transmission of location information about a roaming mobile station MS in a GPRS/INTERNET environment according to the invention, and
Fig. 2 represents a preferred embodiment of the telecommunication system of Fig. 1 wherein devices of the GPRS network are integrated in a single node IGSN.

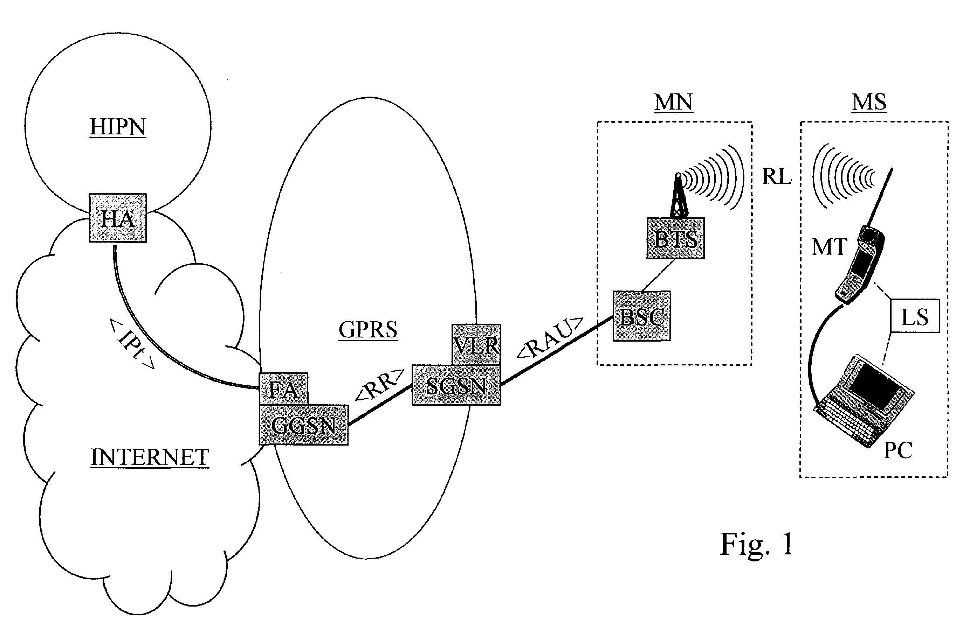

The telecommunication system shown at Fig. 1 comprises a mobile roaming station MS coupled to its home IP network HIPN via a mobile network MN, a packet-based wireless communication network GPRS and an INTERNET. The mobile station MS can comprise a mobile telecommunication terminal such as a notebook or portable computer PC coupled to a mobile telephone MT. The packet-based wireless communication network GPRS preferably operates according to the known "General Packet Radio Service" [GPRS]. This service provides connections to packet data networks, such as the Internet, for mobile stations. In this environment, each mobile station is associated to a home Internet Protocol [IP] network coupled to the Internet.

It is to be noted that the herein described procedures are aligned to the ETSI Standard "*GSM 03*.*60 version 7.0.0 Release 1998* (1999-04)" pages 45-46, the 3GPP/UMTS Standard "*3G TS 23*.*060 version 3.2.1* (2000-01)" pages 63-66 and the IETF Standard "*RFC 2002*" pages 20-21.

The packet-based wireless communication network GPRS includes several terminal location databases known as "Visited Location Registers" [VLR] of which only one VLR is shown and is associated to a "service GPRS support node" SGSN. In the network GPRS, service GPRS support nodes as SGSN are coupled to a "gateway GPRS support node" GGSN that is associated to a "Foreign Agent" FA for the home IP network HIPN. The foreign agent FA interfaces the GPRS with the Internet and allows the coupling, by IP tunneling IPt, of the GGSN with a device location database known as "Home Agent" HA of the home IP network HIPN.

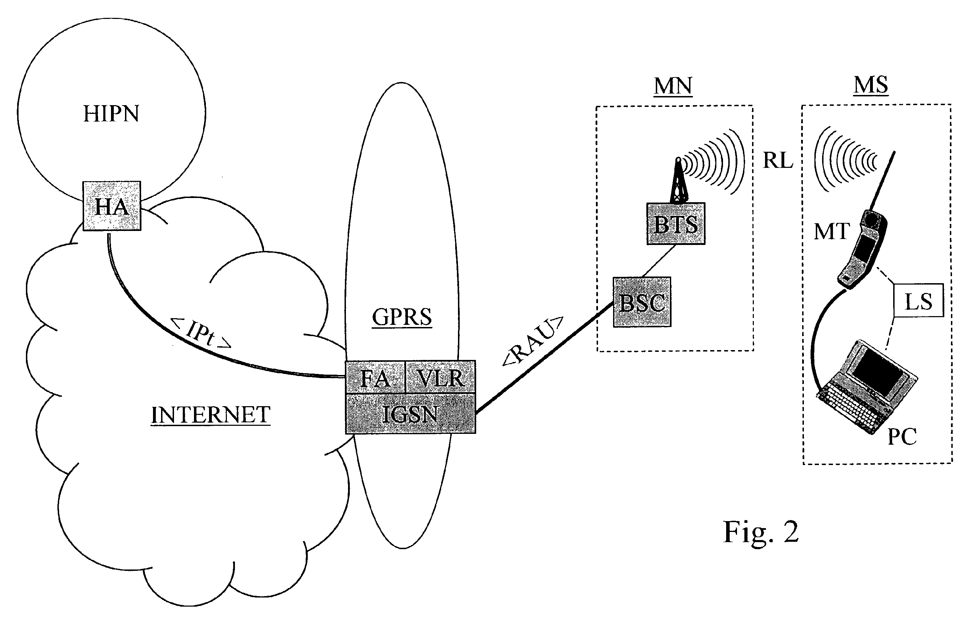

The mobile station MS is coupled to the network GPRS, and more particularly to the service GPRS support node SGSN thereof via the mobile network MN. This mobile network MN is for instance a "Global System for Mobile communication" GSM or an "Universal Mobile Telecommunications System" UMTS. In the Figs. 1 and 2, only a GSM network is considered as mobile network MN. The GSM network has a "Base Station System" comprising a "Base Station Controller" BSC coupled to one or more "Base Transceiver Stations" of which only one BTS is shown. The mobile station MS is coupled to the base transceiver station BTS by a radio link RL, whilst the base station controller BSC is coupled to the service GPRS support node SGSN.

In case of an UMTS mobile network (not shown), the service GPRS support nodes is SGSN is coupled to a "Radio Network Controller" [RNC] and the mobile station MS is coupled by the radio link RL to a node of the "UMTS Radio Access Network" [UTRAN] including also the [RNC] connected to this node.

The movements of the mobile station MS from one routing area to another are indicated both to the GPRS and to its home IP network HIPN by signaling or location information. This location information is handled by a location signaling circuit LS located either in the computer PC or in the mobile telephone MT.

In the GPRS environment, a continuous mobility of the mobile station MS is supported by signaling called "Routing Area Updates" RAU. Periodic RAU or location information is exchanged between the mobile station MS, and more particularly the location signaling circuit LS thereof, and the visited location register VLR via the radio link RL, the mobile network MN and the service GPRS support node SGSN associated to the VLR. This location information is kept in the visited location register VLR as a "mobile is reachable flag" and further indicates to the GPRS the movement of the mobile station MS between routing areas thereof.

In a "Mobile Internet Protocol" [MIP] network, regular registration request messages RR are needed to keep MIP bindings with the mobile station MS in the Home Agent HA as well as in the Foreign Agent FA.

Generally, both the Routing Area Updates RAU of the GPRS and the Registration Requests RR of the MIP are transmitted over the radio link RL. The first, RAU, as signaling and the second, RR, embedded in the data. However, since the radio interface in a mobile system between the base transceiver station BTS and the end-user terminal MS is a scarce resource, the signaling over this radio interface needs to be limited as much as possible. Therefore, in the present invention, the registration requests RR are no longer transmitted over the radio link RL but are be derived from the periodic routing area updates RAU messages. Indeed, since both RR and RAU relate to location information saying that the "mobile is still reachable", they contain similar signaling but transmitted towards different network components, i.e. the location databases VLR and HA.

The foreign agent FA first enforces the mobile station MS not to send registration request messages anymore by setting the associated timer to the largest value possible. Then, only the periodic routing area updates RAU are transmitted over the radio link RL to the visited location register VLR. This visited location register VLR is triggered by the foreign agent FA to transmit the registration requests RR as location information derived from the RAU. The registration requests RR are then forwarded to the home agent HA. In other words, the foreign agent FA emulates the mobile station MS by triggering the visited location register VLR to check the mobile station's reachability status and by terminating the registration replies, i.e. not relaying them to the mobile station MS.

In more detail and by making reference to Fig. 1, the foreign agent FA interrogates the visited location register VLR at regular intervals about the status of the mobile station MS. Since no receiving of a periodic RAU at the service GPRS support node SGSN, and thus also at the gateway GPRS support node GGSN, implicates a release of the status of the "Packet Data Protocol" PDP context for the mobile station MS, the reachability of the mobile station MS can be checked by checking the status of the PDP context. This status is known by the visited location register VLR that is thus able to provide signaling to the foreign agent FA. This signaling or location information is preferably similar to the Registration Request messages RR normally directly handled by the foreign agent FA.

The above operation has no impact on the mobile IP procedures in the mobile station MS and in the home agent HA, only a functional adaptation of the foreign agent FA is performed.

In a preferred embodiment, shown at Fig. 2, the gateway GPRS support node GGSN and the service GPRS support node SGSN are integrated in a same node IGSN of the GPRS network. This node IGSN is thus associated to both the foreign agent FA and the visited location register VLR. The transmission of the registration request messages RR between the foreign agent FA and the visited location register VLR is thereby optimized.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. Telecommunication network comprising a packet-based wireless communication network (GPRS) and the Internet, said Internet being coupled to a home IP network (HIPN) of a roaming mobile station (MS: MT, PC) and to said mobile station by a radio link (RL) via said packet-based wireless communication network,
said mobile station including location signaling means (LS) coupled to a terminal location database (VLR) of said packet-based wireless communication network for exchanging therewith location information (RAU) of said mobile station,
***characterized in that*** said packet-based wireless communication network (GPRS) comprises foreign agent means (FA) coupled to a device location database (HA) associated to said home IP network (HIPN) and coupled to said terminal location database (VLR) for exchanging therewith second location information (RR) of said mobile station (MS: MT, PC), and
*in that* said foreign agent means is adapted to derive said second location information (RR) from the first mentioned location information (RAU).

2. Telecommunication network according to claim 1, ***characterized in that*** said packet-based wireless communication network (GPRS) operates according to the General Packet Radio Service [GPRS],
*in that* said terminal location database (VLR) is a Visited Location Register [VLR] of said packet-based wireless communication network, and
*in that* said first location information (RAU) are Routing Area Updates [RAU] of said packet-based wireless communication network.

3. Telecommunication network according to claim 2, ***characterized in that*** the location signaling means (LS) of said mobile station (MS: MT, PC) are coupled to said terminal location database (VLR) via a service GPRS support node (SGSN) of said packet-based wireless communication network (GPRS).

4. Telecommunication network according to claim 3, ***characterized in that*** said device location database (HA) is a Home Agent [HA] of said home IP network (HIPN) and is coupled to said terminal location database (VLR) via a series connection of said foreign agent means (FA), a gateway GPRS support node (GGSN) of said packet-based wireless communication network (GPRS) and said service GPRS support node (SGSN), said foreign agent means (FA) being a Foreign Agent [FA] of said home IP network (HIPN).

5. Telecommunication network according to claim 4, ***characterized in that*** said gateway GPRS support node (GGSN) and said service GPRS support node (SGSN) are integrated into a same node (IGSN) of said packet-based wireless communication network (GPRS).

6. Telecommunication network according to claim 4, ***characterized in that*** said Home Agent [HA] is coupled to said Foreign Agent [FA] of said home IP network (HIPN) by IP tunneling (IPt) through said Internet.

7. Telecommunication network according to claim 1, ***characterized in that*** the location signaling means (LS) of said mobile station (MS: MT, PC) are coupled to said terminal location database (VLR) of said packet-based wireless communication network (GPRS) via a Global System for Mobile communication [GSM].

8. Telecommunication network according to claim 1, ***characterized in that*** the location signaling means (LS) of said mobile station (MS: MT, PC) are coupled to said terminal location database (VLR) of said packet-based wireless communication network (GPRS) via an Universal Mobile Telecommunications System [UMTS].

9. Telecommunication network according to claim 1, ***characterized in that*** said mobile station (MS: MT, PC) comprises a mobile telecommunication terminal (MT) coupled to a portable device (PC).

10. Method for signaling the location of a roaming mobile station (MS: MT, PC) coupled to the Internet by a radio link (RL) via a packet-based wireless communication network (GPRS), the method comprising a step of exchanging location information (RAU) between said mobile station and a terminal location database (VLR) of said packet-based wireless communication network,
***characterized in that*** said method further comprises a step of exchanging second location information (RR) of said mobile station (MS: MT, PC) between said terminal location database (VLR) and a device location database (HA) associated to a home IP network (HIPN) of said mobile station (MS) via foreign agent means (FA) interfacing said packet-based wireless communication network (GPRS) and said Internet, and
*in that* said method further comprises a step of deriving said second location information (RR) from the first mentioned location information (RAU).

11. Method according to claim 10, ***characterized in that*** said second location information (RR) is derived from the first mentioned location information (RAU) by said foreign agent means (FA) that is a Foreign Agent [FA] of said home IP network (HIPN).

12. Method according to claim 10, ***characterized in that*** said method further comprises a step of exchanging said second location information (RR) of said mobile station (MS: MT, PC) between said device location database (HA) and said foreign agent means (FA) by IP tunneling (IPt) through said Internet, said device location database (HA) being a Home Agent [HA] of said home IP network, and said foreign agent means (FA) being a Foreign Agent [FA] of said home IP network (HIPN).

13. Method according to claim 10, ***characterized in that*** said method is used in the telecommunication network of claim 1.
